# FASCICULE DE BREVET EUROPEEN

(11) **EP 1 522 809 B1**
(45) Date de publication et mention de la délivrance du brevet: **24.12.2008**
(21) Numéro de dépôt: 04300657.6
(22) Date de dépôt: 05.10.2004
(51) Int. Cl.: F27B 9/10, B23K 1/008

(54) **Procédé de traitement thermique d'une série d'objets et appareil associé**
Verfahren zur thermischen Behandlung von aufeinanderfolgenden Gegenständen und Apparat dafür
Process for the thermic treatment of objects in series and apparatus therefor

(30) Priorité: 09.10.2003 FR 0350664
(43) Date de publication de la demande: 13.04.2005
(73) Titulaire: L'AIR LIQUIDE, Société Anonyme pour l'Etude et l'Exploitation des Procédés Georges Claude, 75007 Paris (FR)
(72) Inventeur: Carsac, Claude, 91470, LIMOURS (FR); Paganessi, Joseph, 75321 cedex 07, PARIS (FR); Perrin, Jérôme, 75013, PARIS (FR); Kae-Nune, Patrick, 75016, PARIS (FR)
(74) Mandataire: Mellul-Bendelac, Sylvie Lisette

(56) Documents cités:
- EP-A- 0 319 948
- DE-A- 4 219 913
- DE-A- 4 242 823
- US-A- 4 551 091
- US-A- 4 894 009
- US-A- 4 915 622

## Description

La présente invention concerne un procédé de traitement thermique d'objets dans une enceinte délimitant une zone interne de traitement et disposée dans un fluide gazeux environnant, notamment l'air, ladite enceinte comprenant au moins un passage d'entrée et un passage de sortie, lesdits passages étant ménagés entre la zone de traitement et l'extérieur de l'enceinte ;le procédé étant du type comprenant les étapes suivantes :
(a) on chauffe la zone de traitement ;
(b) on injecte un fluide gazeux de traitement dans la zone de traitement;
(c) on transporte lesdits objets à travers ladite zone de traitement ; et
(d) on injecte un fluide gazeux d'isolation au voisinage d'au moins un desdits passages.

Ce procédé s'applique à l'assemblage de cartes électroniques par brasage.

Dans un procédé du type précité (WO 91/11284), des composants à assembler sont disposés en appui sur une carte, au niveau de zones recouvertes d'une crème à braser. La carte est alors introduite dans un four, où elle subit un cycle thermique assurant le brasage.

Pour améliorer la qualité de ce brasage et notamment éviter les défauts sur les cartes à structure complexe en raison de la faible taille des composants, un courant d'azote d'inertage est injecté à l'intérieur du four. La concentration en oxygène dans le four est ainsi diminuée en dessous d'une valeur limite de quelques centaines de ppm (parties par million). Cette opération, que l'on peut qualifier d' « inertage », sous atmosphère d'azote, évite notamment l'oxydation des parties à braser lors du chauffage.

De tels procédés ne donnent pas entière satisfaction. En effet, pour maintenir la teneur en oxygène inférieure à quelques centaines de ppm dans le four, et donc la qualité du brasage, un débit d'azote élevé est requis (de l'ordre de 20 à 40 m³/h).

L'invention a pour but principal de remédier à cet inconvénient, c'est-à-dire de créer un procédé de traitement thermique qui assure une haute qualité de traitement, à faible coût.

A cet effet, l'invention a pour objet un procédé du type précité, conforme à la revendication 1 ci-après.

Le procédé suivant l'invention peut comporter une ou plusieurs des caractéristiques suivantes, prise(s) isolément ou selon toutes les combinaisons techniquement possibles :
- la densité dudit fluide gazeux d'isolation à la température qui règne au sein du au moins un desdits passages est sensiblement égale à la densité du fluide gazeux environnant à la température qui règne à l'extérieur de l'enceinte.
- la densité dudit fluide gazeux d'isolation à la température qui règne au sein du au moins un desdits passages est supérieure à la densité du fluide gazeux environnant à la température qui règne à l'extérieur de l'enceinte.
- dans l'étape (d), on effectue ledit réglage de densité par le fait que l'on élabore le fluide d'isolation à partir d'au moins deux sources de fluide gazeux auxiliaires, la densité d'au moins un des fluides gazeux auxiliaires, mesurée à une température donnée, étant supérieure à la densité du fluide gazeux de traitement, mesurée à ladite température donnée.

La présente invention concerne également un appareil de traitement thermique d'objets, conforme à la revendication 5 ci-après.

L'appareil selon l'invention peut aussi comprendre l'une ou plusieurs des caractéristiques suivantes :
- la densité du fluide gazeux d'isolation à la température qui règne au sein du au moins un desdits passages est sensiblement égale à la densité du fluide gazeux environnant à la température qui règne à l'extérieur de l'enceinte.
- la densité dudit fluide gazeux d'isolation à la température qui règne au sein du au moins un desdits passages est supérieure à la densité du fluide gazeux environnant à la température qui règne à l'extérieur de l'enceinte.
- les moyens de réglage comprennent des moyens d'injection d'au moins un fluide gazeux auxiliaire.

Un exemple de mise en oeuvre de l'invention va maintenant être décrit en regard des dessins annexés, sur lesquels :
- la Figure 1 est une vue schématique en coupe suivant un plan médian d'un appareil suivant l'invention ; et
- la Figure 2 est une vue d'un détail de la Figure 1.

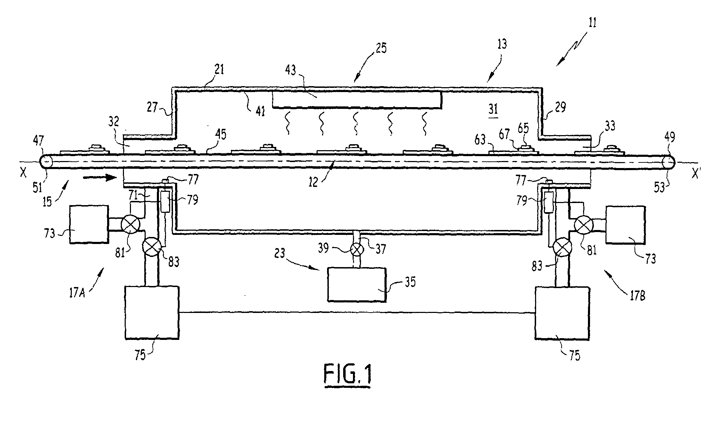

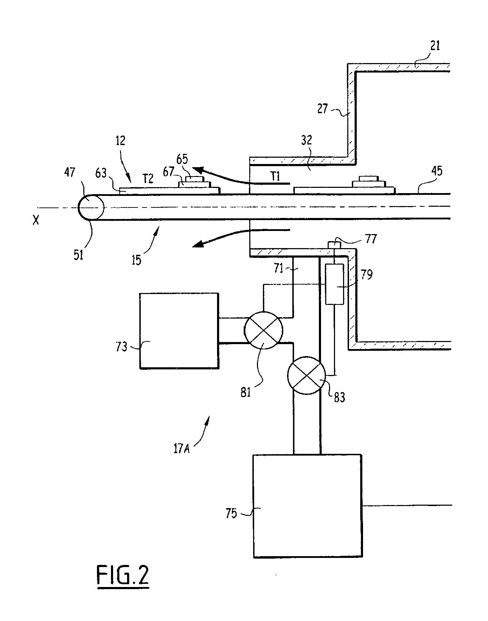

L'appareil 11 de traitement thermique représenté sur les Figures 1 et 2 est destiné à l'assemblage de cartes électroniques 12 dans un procédé continu de brasage par refusion.

Cet appareil 11 comprend un four 13 de brasage, un convoyeur 15, et des barrières gazeuses 17A et 17B disposées respectivement à l'entrée et à la sortie du four de brasage 13.

Dans tout ce qui suit, les termes « amont », « aval » et « supérieur » s'entendent par rapport au sens de circulation des cartes électroniques 12 sur le convoyeur 15 (de la gauche vers la droite sur la Figure 1).

Le four de brasage 13 comprend une enceinte 21, un injecteur 23 de gaz de traitement, et des moyens 25 de chauffage disposés dans l'enceinte 21.

L'enceinte 21 s'étend le long d'un premier axe X-X' longitudinal entre une extrémité amont 27 et une extrémité aval 29. Les parois de cette enceinte 21 délimitent une zone interne 31 de traitement thermique.

Des passages amont et aval 32 et 33 sont ménagés dans l'enceinte 21, respectivement au niveau des extrémités amont et aval 27 et 29 de l'enceinte 21. Ces passages 32 et 33 relient l'extérieur de l'enceinte 21 à la zone de traitement 31.

L'enceinte 21 est disposée dans un gaz environnant comprenant au moins un gaz oxydant, notamment de l'oxygène. Dans l'exemple qui suit, le gaz environnant est de l'air à température ambiante.

L'injecteur 23 de gaz de traitement débouche dans l'enceinte 21. Cet injecteur 23 comprend une source 35 de gaz de traitement (ici un gaz d'inertage) et un conduit 37 d'amenée de ce gaz dans la zone de traitement 31, muni d'une vanne 39.

Le gaz de traitement contenu dans la source 35 peut être à titre illustratif de l'azote, de l'hélium, de l'hydrogène, de l'argon, du dioxyde de carbone ou encore leurs mélanges. Selon l'invention on s'intéresse tout particulièrement aux mélanges à base d'hélium qui possèdent un coefficient de conductivité thermique plus élevé que l'air ou l'azote.

L'injection du gaz d'inertage dans l'enceinte 21 permet de maintenir la concentration en oxygène à l'intérieur de la zone de traitement 31 à une valeur inférieure à quelques centaines de ppm.

Les moyens de chauffage 25 sont montés fixes sur une paroi 41 supérieure de l'enceinte 21, dans la zone de traitement 31, en regard du convoyeur 15. Ils comprennent ici au moins un organe 43 de chauffage convectif.

Le convoyeur 15 comprend une bande 45 de transport, qui traverse l'enceinte 21 longitudinalement le long de l'axe X-X', et s'étend entre une extrémité amont 47 et une extrémité aval 49. Les extrémités amont et aval 47 et 49 de la bande 45 font saillie à l'extérieur de l'enceinte 21, afin de permettre le chargement et le déchargement des cartes électroniques 12.

La bande 45 est enroulée à ses extrémités 47 et 49 sur des rouleaux d'entraînement 51 et 53. Elle est ainsi mobile en translation le long de l'axe X-X' depuis l'amont vers l'aval.

Les cartes 12 sont posées sur la bande 45, à intervalles réguliers entre son extrémité amont 47 et son extrémité aval 49.

Chaque carte 12 comprend un support 63 et un composant 65 à assembler à ce support, en appui sur une couche 67 de crème à braser disposée sur le support 63.

Les barrières gazeuses amont et aval 17A et 17B sont disposées respectivement au niveau des extrémités amont et aval 27 et 29 de l'enceinte 21.

La barrière amont 17A et la barrière aval 17B sont de structure analogue. Par suite, on décrira uniquement la barrière amont 17A dans ce qui suit.

La barrière amont 17A comprend un injecteur 71, relié à deux sources de gaz 73 et 75, une sonde de température 77 et des moyens de commande 79.

L'injecteur 71 comprend un conduit d'amenée qui débouche dans le passage amont 32 de l'enceinte 21 . Le conduit d'amenée est par ailleurs relié aux sources de gaz 73 et 75.

Dans le mode de réalisation illustré ici, la première source de gaz 73 contient un gaz dont la densité à une température donnée est inférieure ou égale à la densité de l'air, à cette température donnée. La deuxième source de gaz 75 contient un gaz dont la densité, à une température donnée, est supérieure à la densité de l'air à cette température donnée.

De préférence, le gaz contenu dans la première source 73 est l'azote. Des exemples de gaz contenus dans la deuxième source 75 sont le dioxyde de carbone et l'argon.

Chaque source de gaz 73, 75 est reliée à l'injecteur 71 par un conduit muni d'une vanne de commande 81, 83 qui permet de régler le débit et la composition du gaz d'isolation délivré dans l'injecteur 71, donc ainsi de régler la densité de ce gaz d'isolation.

La sonde de température 77 est disposée dans le passage amont 32, au voisinage de la sortie de l'injecteur 71.

Les vannes de commande 81 et 83 ainsi que la sonde de température 77 sont reliées électriquement aux moyens de commande 79, de sorte que le débit et la composition du gaz d'isolation délivré par la barrière gazeuse est commandé en fonction de la température mesurée par la sonde 77.

Bien entendu si l'on a illustré ici une structure d'injection de gaz d'isolation au niveau des passages d'entrée/sortie arrivant uniquement par le bas des passages, d'autres arrangements sont possibles et couramment pratiqués incluant des injections par le haut, ou à la fois par le bas et le haut de chaque passage.

On décrira maintenant dans ce qui suit un exemple de fonctionnement de l'appareil 11 suivant l'invention lors d'une opération d'assemblage d'une carte électronique 12.

Dans un premier temps, les moyens de chauffage 25 sont activés, afin d'établir une température de brasage dans la zone de traitement 31.

Par ailleurs, le gaz de traitement (d'inertage) est injecté dans le four par l'injecteur 23, afin de réduire la teneur en oxygène dans l'enceinte 21, jusqu'à une valeur inférieure à quelques centaines de ppm.

Lors de la montée en température dans l'enceinte 21, ou une fois la température dans l'enceinte 21 stabilisée, les barrières gazeuses amont et aval 17A et 17B sont activées.

On décrira par la suite le fonctionnement de la barrière amont 17A. Le fonctionnement de la barrière aval 17B est analogue au fonctionnement de la barrière amont 17A.

La température à l'extrémité amont 27 de la zone d'inertage 31 est mesurée par la sonde 77. Chacune des vannes de commande 81 et 83 est actionnée par les moyens de commande 79. La composition du gaz d'isolation injecté par l'injecteur 71 de la barrière amont 17A est ainsi commandée de sorte que ce gaz possède une densité, à la température qui règne au niveau du passage amont 32 de l'enceinte 21, sensiblement égale à la densité de l'air à température ambiante à l'extérieur du four de brasage 13.

Le convoyeur 15 est alors mis en mouvement et des cartes 12 sont déposées à intervalles réguliers sur la bande 45.

Comme illustré sur la Figure 2, les densités du gaz d'isolation dans la barrière amont 17A et du gaz environnant à l'extérieur de cette barrière 17A sont sensiblement identiques, de sorte que le déplacement du fluide gazeux depuis la barrière 17A vers l'extérieur est sensiblement laminaire et parallèle à l'axe horizontal X-X'.

Cette circulation évite la pénétration d'air dans l'enceinte 21 qui risquerait de se produire si le gaz d'isolation, relativement plus chaud, qui sort de la barrière 17A, avait une densité plus faible que l'air à température ambiante, particulièrement quand une carte 12 pénètre dans l'enceinte 21.

Par suite, le débit de gaz d'isolation injecté au niveau de la barrière amont 17A peut être sensiblement réduit.

Les cartes 12 sont alors amenées vers l'extrémité aval 29 de l'enceinte 21 et subissent un traitement thermique lorsqu'elles passent en regard des moyens de chauffage 25.

Les cartes 12 passent ensuite à travers la barrière aval 17B et sont déchargées de la bande 45 après refroidissement.

Comme précisé précédemment, le fonctionnement de la barrière aval 17B est analogue au fonctionnement de la barrière amont 17A.

De même, la composition du gaz d'isolation délivré par la barrière aval 17B est commandée de sorte que ce gaz possède une densité, à la température qui règne au niveau du passage aval 33, sensiblement égale à la densité de l'air à température ambiante à l'extérieur du four de brasage 13.

De même selon l'invention, la composition du gaz d'isolation délivré par les barrières amont et aval est commandée de sorte que ce gaz possède une densité, à la température qui règne au niveau des passages, supérieure à la densité du gaz d'inertage au niveau de l'extrémité amont ou aval 27 ou 29 de l'enceinte 21, à la température au niveau de cette extrémité 27 ou 29.

A titre illustratif les gaz mis en oeuvre dans les différentes zones de l'installation sont les suivants :
- à titre de gaz d'inertage : des mélanges avantageux thermiquement tels de l'hélium ou des mélanges à base d'hélium, des mélanges comprenant de l'hydrogène tels des mélanges azote-hydrogène ;
- à titre de gaz d'isolation : des gaz ou mélanges à densité plus élevée tels du CO₂, des mélanges à base de CO₂ tels He-CO₂, N₂-CO₂, Ar-CO₂....

Grâce à l'invention qui vient d'être décrite, il est possible de disposer d'un procédé de traitement thermique de haute qualité, particulièrement économique. Ce procédé permet notamment de limiter considérablement les pertes donc la consommation en gaz d'inertage, ce qui se révèle tout particulièrement avantageux voire nécessaire dans les cas d'utilisation de gaz d'inertage thermiquement avantageux mais onéreux.

## Revendications

1. Procédé de traitement thermique d'une série d'objets (12) dans une enceinte (21) délimitant une zone interne (31) de traitement et disposée dans un fluide gazeux environnant, notamment l'air, ladite enceinte (21) comprenant au moins un passage d'entrée (32) et un passage de sortie (33), lesdits passages (32, 33) étant ménagés entre la zone de traitement (31) et l'extérieur de l'enceinte (21) ; le procédé étant du type comprenant les étapes suivantes :
(a) on chauffe tout ou partie de la zone de traitement (31) ;
(b) on injecte un fluide gazeux de traitement dans la zone de traitement (31) ;
(c) on transporte lesdits objets (12) à travers ladite zone de traitement (31); et
(d) on injecte un fluide gazeux d'isolation au voisinage d'au moins un desdits passages (32, 33) ;
la densité dudit fluide gazeux d'isolation à la température qui règne au sein du au moins un desdits passages (32, 33) étant supérieure à la densité du fluide gazeux de traitement à l'intérieur du four, au voisinage du au moins un desdits passages,
**caractérisé en ce que** dans l'étape (d), on règle la densité du fluide gazeux d'isolation en fonction de la température qui règne en au moins un point de l'enceinte (21).

2. Procédé selon la revendication 1, **caractérisé en ce que** la densité dudit fluide gazeux d'isolation à la température qui règne au sein du au moins un desdits passages (32, 33) est sensiblement égale à la densité du fluide gazeux environnant à la température qui règne à l'extérieur de l'enceinte (21).

3. Procédé selon la revendication 1, **caractérisé en ce que** la densité dudit fluide gazeux d'isolation à la température qui règne au sein du au moins un desdits passages (32, 33) est supérieure à la densité du fluide gazeux environnant à la température qui règne à l'extérieur de l'enceinte (21).

4. Procédé selon l'une des revendications précédentes, **caractérisé en ce que**, dans l'étape (d), on effectue ledit réglage de densité par le fait que l'on élabore le fluide d'isolation à partir d'au moins deux sources de fluide gazeux auxiliaires (73, 75), la densité d'au moins un des fluides gazeux auxiliaires (75), mesurée à une température donnée, étant supérieure à la densité du fluide gazeux de traitement, mesurée à ladite température donnée.

5. Appareil (11) de traitement thermique d'une série d'objets (12), du type comprenant :
- une enceinte (21) délimitant une zone interne (31) de traitement et destinée à être disposée dans un fluide gazeux environnant, notamment l'air ; ladite enceinte (21) comprenant au moins un passage d'entrée (32) et un passage de sortie (33), lesdits passages (32, 33) étant ménagés entre la zone de traitement (31) et l'extérieur de l'enceinte (21) ;
- des moyens (25) de chauffage de tout ou partie de la zone de traitement (31) ;
- des moyens (15) de transport desdits objets (12) à travers ladite zone de traitement (31) ;
- des moyens (23) d'injection d'un fluide gazeux de traitement dans la zone de traitement (31) ; et
- des moyens (17A, 17B) d'injection d'un fluide gazeux d'isolation au sein d'au moins un desdits passages (32, 33) ;
lesdits moyens (17A, 17B) d'injection d'un fluide gazeux d'isolation comprenant une source de fluide gazeux d'isolation dont la densité à la température qui règne au sein du au moins un desdits passages (32, 33) est supérieure à la densité du fluide gazeux de traitement à l'intérieur du four, au voisinage du au moins un desdits passages ;
**se caractérisant en ce qu'**il comprend en outre des moyens (79, 81, 83) de réglage de la densité du fluide gazeux d'isolation, asservis à des moyens (77) de mesure de la température qui règne en au moins un point de l'enceinte (21).

6. Appareil (11) selon la revendication 5 **caractérisé en ce que** la densité du fluide gazeux d'isolation à la température qui règne au sein du au moins un desdits passages (32, 33) est sensiblement égale à la densité du fluide gazeux environnant à la température qui règne à l'extérieur de l'enceinte (21).

7. Appareil (11) selon la revendication 5 **caractérisé en ce que** la densité dudit fluide gazeux d'isolation à la température qui règne au sein du au moins un desdits passages (32, 33) est supérieure à la densité du fluide gazeux environnant à la température qui règne à l'extérieur de l'enceinte (21).

8. Appareil (11) selon l'une des revendications 5 à 7, **caractérisé en ce que** les moyens de réglage (79, 81, 83) comprennent des moyens d'injection (83) d'au moins un fluide gazeux auxiliaire (75).

## Claims

1. Process for the heat treatment of a series of objects (12) in an enclosure (21), situated in a surrounding gaseous fluid, particularly air, and defining an internal treatment zone (31), the said enclosure (21) comprising at least one entrance passage (32) and at least one exit passage (33), the said passages (32, 33) being provided between the treatment zone (31) and the exterior of the enclosure (21); the process being of the type that comprises the following steps:
(a) all or part of the treatment zone (31) is heated;
(b) a gaseous treatment fluid is injected into the treatment zone (31);
(c) the said objects (12) are transported through the said treatment zone (31); and
(d) a gaseous isolating fluid is injected in the vicinity of at least one of the said passages (32, 33);
the density of the said gaseous isolating fluid at the temperature found in the one or more of the said passages (32, 33) being greater than the density of the gaseous treatment fluid inside the oven, in the vicinity of the one or more of the said passages, **characterized in that**, in step (d), the density of the gaseous isolating fluid is controlled as a function of the temperature found at at least one point in the enclosure (21).

2. Process according to Claim 1, **characterized in that** the density of the said gaseous isolating fluid at the temperature found in the one or more of the said passages (32, 33) is approximately equal to the density of the surrounding gaseous fluid at the temperature found outside the enclosure (21).

3. Process according to Claim 1, **characterized in that** the density of the said isolating gaseous fluid at the temperature found in the one or more of the said passages (32, 33) is greater than the density of the surrounding gaseous fluid at the temperature found outside the enclosure (21).

4. Process according to one of the preceding claims, **characterized in that**, in step (d), the said density is controlled by producing the isolating fluid from at least two sources of auxiliary gaseous fluid (73, 75), the density of at least one of the auxiliary gaseous fluids (75), measured at a given temperature, being greater than the density of the gaseous treatment fluid measured at the said given temperature.

5. Apparatus (11) for the heat treatment of a series of objects (12), of the type that comprises:
- an enclosure (21), intended to be located in a surrounding gaseous fluid, particularly air, and defining an internal treatment zone (31); the said enclosure (21) comprising at least one entrance passage (32) and at least one exit passage (33), the said passages (32, 33) being provided between the treatment zone (31) and the exterior of the enclosure (21);
- means (25) for heating all or part of the treatment zone (31);
- means (15) for transporting the said objects (21) through the said treatment zone (31);
- means (23) for injecting a gaseous treatment fluid into the treatment zone (31); and
- means (17A, 17B) for injecting a gaseous isolating fluid into at least one of the said passages (32, 33);
the said means (17A, 17B) for injecting a gaseous isolating fluid comprising a source of gaseous isolating fluid whose density at the temperature found in the one or more of the said passages (32, 33) is greater than the density of the gaseous treatment fluid inside the oven, in the vicinity of the one or more of the said passages;
the apparatus being **characterized in that** it also includes means (79, 81, 83) for controlling the density of the gaseous isolating fluid, operated by means (77) for measuring the temperature found at at least one point in the enclosure (21).

6. Apparatus (11) according to Claim 5, **characterized in that** the density of the gaseous isolating fluid at the temperature found in the one or more of the said passages (32, 33) is approximately equal to the density of the surrounding gaseous fluid at the temperature found outside the enclosure (21).

7. Apparatus (11) according to Claim 5, **characterized in that** the density of the said gaseous isolating fluid at the temperature found in the one or more of the said passages (32, 33) is greater than the density of the surrounding gaseous fluid at the temperature found outside the enclosure (21).

8. Apparatus (11) according to one of Claims 5 to 7, **characterized in that** the control means (79, 81, 83) comprise means (83) of injecting at least one auxiliary gaseous fluid (75).

## Patentansprüche

1. Verfahren zur thermischen Behandlung einer Reihe von Objekten (12) in einer Einfassung (21), die eine Innenzone (31) zur Behandlung abgrenzt und in einem umgebenden Gasstrom angeordnet ist, insbesondere in Luft, wobei die Einfassung (21) mindestens einen Eingangsdurchgang (32) und einen Ausgangsdurchgang (33) aufweist, wobei die Durchgänge (32, 33) zwischen der Behandlungszone (31) und dem Äußeren der Einfassung (21) eingerichtet sind; wobei das Verfahren zu dem Typ gehört, der die folgenden Schritte aufweist:
a) Erhitzen eines Teils oder der ganzen Behandlungszone (31);
b) Einspritzen von gasförmigem Behandlungsfluid in die Behandlungszone (31);
c) Transportieren der Objekte (12) durch die Behandlungszone (31) und
d) Einspritzen eines gasförmigen Isolierfluids in der Nähe mindestens eines der Durchgänge (32, 33);
wobei die Dichte des gasförmigen Isolierfluids bei der Temperatur, die innerhalb des mindestens einen der Durchgänge (32, 33) herrscht, größer ist als die Dichte des gasförmigen Behandlungsstroms im Inneren des Ofens, in der Nähe des mindestens einen der Durchgänge,
**dadurch gekennzeichnet, dass** man im Schritt d) die Dichte des gasförmigen Isolierfluids in Abhängigkeit von der Temperatur einstellt, die an mindestens einem Punkt der Einfassung (21) herrscht.

2. Verfahren nach Anspruch 1, **dadurch gekennzeichnet, dass** die Dichte des gasförmigen Isolierfluids bei der Temperatur, die innerhalb des mindestens einen der Durchgänge (32, 33) herrscht, im Wesentlichen gleich der Dichte des umgebenden gasförmigen Fluids bei der Temperatur, die außerhalb der Einfassung (21) herrscht, ist.

3. Verfahren nach Anspruch 1, **dadurch gekennzeichnet, dass** die Dichte des gasförmigen Isolierfluids bei der Temperatur, die innerhalb des mindestens einen der Durchgänge (32, 33) herrscht, größer ist als die Dichte des umgebenden gasförmigen Fluids bei der Temperatur, die außerhalb der Einfassung (21) herrscht.

4. Verfahren nach einem der vorhergehenden Ansprüche, **dadurch gekennzeichnet, dass** man beim Schritt d) das Einstellen der Dichte durch die Tatsache ausführt, dass man das Isolierfluid ausgehend von mindestens zwei gasförmigen Hilfsfluidquellen (73, 75) erstellt, wobei die Dichte mindestens eines der gasförmigen Hilfsfluide (75) bei einer gegebenen Temperatur gemessen größer ist als die Dichte des gasförmigen Behandlungsfluids bei der gegebenen Temperatur gemessen.

5. Gerät (11) zur thermischen Behandlung einer Reihe von Objekten (12), des Typs, der Folgendes aufweist:
- einer Einfassung (21), die eine Innenzone (31) zur Behandlung abgrenzt und die dazu bestimmt ist, in einem umgebenden gasförmigen Fluid, insbesondere Luft, angeordnet zu werden; wobei die Einfassung (21) mindestens einen Eingangsdurchgang (32) und einen Ausgangsdurchgang (33) aufweist, wobei die Durchgänge (32, 33) zwischen der Behandlungszone (31) und dem Äußeren der Einfassung (21) eingerichtet sind;
- Mittel (25) zum Heizen der ganzen oder eines Teils der Behandlungszone (31);
- Mittel (15) zum Transportieren der Objekte (12) durch die Behandlungszone (31);
- Mittel (23) zum Einspritzen eines gasförmigen Behandlungsfluids in die Behandlungszone (31), und
- Mittel (17A, 17B) zum Einspritzen eines gasförmigen Isolierfluids innerhalb mindestens eines der Durchgänge (32, 33);
wobei die Mittel (17A, 17B) zum Einspritzen eines gasförmigen Isolierfluids eine Quelle gasförmigen Isolierfluids aufweisen, dessen Dichte bei der Temperatur, die innerhalb des mindestens einen der Durchgänge (32, 33) herrscht, größer ist als die Dichte des gasförmigen Behandlungsfluids im Inneren des Ofens, in der Nähe des mindestens einen der Durchgänge;
**dadurch gekennzeichnet, dass** es ferner Mittel (79, 81, 83) zum Einstellen der Dichte des gasförmigen Isolierfluids aufweist, die von Messmitteln (77) der Temperatur, die an mindestens einem Punkt der Einfassung (21) herrscht, gesteuert werden.

6. Gerät (11) nach Anspruch 5, **dadurch gekennzeichnet, dass** die Dichte des gasförmigen Isolierfluids bei der Temperatur, die im Inneren des mindestens einen der Durchgänge (32, 33) herrscht, im Wesentlichen gleich der Dichte des umgebenden gasförmigen Fluids bei der Temperatur, die außerhalb der Einfassung (21) herrscht, ist.

7. Gerät (11) nach Anspruch 5, **dadurch gekennzeichnet, dass** die Dichte des gasförmigen Isolierfluids bei der Temperatur, die innerhalb des mindestens einen der Durchgänge (32, 33) herrscht, größer ist als die Dichte des umgebenden gasförmigen Fluids bei der Temperatur, die außerhalb der Einfassung (21) herrscht.

8. Gerät (11) nach einem der Ansprüche 5 bis 7, **dadurch gekennzeichnet, dass** die Einstellmittel (79, 81, 83) Mittel zum Einspritzen (83) mindestens eines gasförmigen Hilfsfluids (75) aufweisen.
